Europäisches Patentamt

European Patent Office

Office européen des brevets

(19)

(11) Publication number: **0 015 141**
**B1**

(12) **EUROPEAN PATENT SPECIFICATION**

(45) Date of publication of patent specification: **27.04.83**

(51) Int. Cl.³: **G 11 B 7/24, B 41 M 5/24**

(21) Application number: **80300483.7**

(22) Date of filing: **20.02.80**

(54) Dielectric recording medium and a method of making a record.

<table>
<tr><td>

(30) Priority: **21.02.79 US 13706**

(43) Date of publication of application:
**03.09.80 Bulletin 80/18**

(45) Publication of the grant of the patent:
**27.04.83 Bulletin 83/17**

(84) Designated Contracting States:
**AT BE CH DE FR GB IT LU NL SE**

(56) References cited:
**US - A - 4 101 907**

**IEEE SPECTRUM, Vol. 15, No. 8, August 1978
New York
R.A. BARTOLINI et al. "Optical Disk Systems
Emerge" pages 20 to 28**

**IEEE JOURNAL OF QUANTUM ELECTRONICS
Vol. QE—14, No. 7, July 1978 A.E. BELL et al.
"Antireflection Structures For Optical
Recording" pages 487 to 485**

</td><td>

(73) Proprietor: **DISCOVISION ASSOCIATES
P.O. Box 6600 3300 Hyland Avenue
Costa Mesa California 92626 (US)**

(72) Inventor: **Wilkinson, Richard L
21341, Avenida Manantial
E. Toro, California 92630 (US)**

(74) Representative: **Arthur, George Fitzgerald et al,
KILBURN & STRODE 30, John Street
London WC1N 2DD (GB)**

</td></tr>
</table>

Courier Press, Leamington Spa, England

Dielectric recording medium and a method of making a record

This invention relates generally to information recording media and, more particularly, to recording media of the type in which information can be recorded and read by optical techniques.

Information recording media of this particular type are especially adapted for use as discs for storing frequency-modulated video signals and digital data. In the past, record discs of this type have typically comprised thin metallic films that are coated onto glass substrates using standard vacuum techniques. Information has typically been recorded in such a disc by a thermal process in which an intensity-modulated beam of radiation is focused onto the disc as the disc is rotated with respect to the beam, whereby a series of microscopic holes are melted in the metal film.

In the Article "Optical Disk Systems Emerge" in volume 15, No. 8 (1978) of I.E.E.E. Spectrum certain optical disc blanks are described in the passage between pages 20 and 28.

In one proposal a layer of dye is evaporated onto a thin reflective coating of aluminium deposited onto the disc substrate. If the thickness of the dye is a quarter wave length of the recording light beam, light can be absorbed by the dye layer which is locally evaporated to form a pit, being one of a track of spaced pits constituting the recorded information.

Another proposal is that the aluminium layer should first be coated with a transparent dielectric spacer of for example, silicon dioxide, about a quarter wave length thick. A thin film of metallic recording material is deposited on the spacer. That structure has an advantage over the previously proposed structure in that the thin metallic recording film is more durable than the dye, and is easy to evaporate while being thin; for example, about 5 nm of titanium is not very reflective. During recording the outer metal absorbs light and melts leaving the local pit in the information track which in turn exposes the transparent heat insulating dielectric silicon dioxide layer.

Metallic film recording media have not proved entirely satisfactory, however, because most of the energy in the beam of radiation is lost due to reflection off the outer surface of the film and transmission into the substrate, and because the metallic film ordinarily has a relatively high thermal conductivity and a relatively low melting temperature. This latter factor results in a conduction of the heat generated by the absorption of the beam of radiation radially outwardly from the point of impingement, which thus forms a hole in the film significantly larger than the cross-sectional size of the beam. This limits the density of information that can be stored on the record medium. Additionally, melting of the metal film usually results in a metallic residue being deposited around the periphery of each pit, thereby reducing the signal-to-noise ratio of the signal that can be reproduced from the medium.

According to the present invention, a record blank on which information can be recorded in the form of a track of spaced pits comprises a substrate with a light-reflective suface; a layer of dielectric material overlying the light-reflective surface of said substrate; an outer layer of metallic material overlying said layer of dielectric material, said outer layer of metallic material being at least partially transparent to incoming light, and is characterised in that: said dielectric material is a light absorbing material; said outer layer of metallic material is substantially non-absorbing of light; and the surface of said outer layer of metallic material in contact with said dielectric material is at least partially light-reflective whereby light incident locally on the outer layer of metallic material will be at least partially transmitted to said dielectric material and reflected between said reflective surface of said substrate and said reflective surface of said outer layer of metallic material so that said dielectric material will be locally evaporated by the absorbed light, the vaporised material carrying with it the overlying portion of the outer layer of metallic material to form a pit.

It will be appreciated that the local pits in the track of information are much deeper than in the trilayer structure described in I.E.E.E. Spectrum in that in that trilayer the pits have a depth only equal to the thickness of the titanium layer, whereas in accordance with the present invention, the pits extend through the thickness of the dielectric material as well as the overlying portion of the metallic outer layer to expose the light reflective surface of the substrate. The dielectric layer does not have to be transparent as with the trilayer in the I.E.E.E. Spectrum Article.

Also, since the dielectric material ordinarily has a relatively low thermal conductivity, each of the successive pits will be comparable in size to that of the spot formed by the write beam at its point of impingement on the disc. Thus, information can be recorded in the medium with a very high recording density. Further, since only a relatively small amount of metallic material is removed by the formation of each pit and since the dielectric material is evaporated rather than melted, there is very little material residue surrounding the pits and the information can be recovered at a relatively high signal-to-noise ratio.

The recording medium preferably is in the form of a record disc having a glass or plastic substrate, an overlay of dielectric material, for example silicon monoxide with a relatively low light absorptive index and an outer aluminium layer less than about 50 A° thick. The disc is useful in a direct read after write process in which as a track of pits is formed with a write beam of radiation, a read beam of lower intensity is directed at the pits immediately after formation, the wavelength of the read beam beam, so that reflection from the metallic surface can be achieved. Reflection from the exposed light reflective surface at the pit will be defracted and scattered when leaving the pit.

There is preferably a transparent plastic protective layer spaced above the outer metallic layer through which the write and read beams can be transmitted without substantial attenuation.

Preferably the light reflective surface of the substrate comprises an inner layer of aluminium about 600 A° thick.

A disc with a combined thickness of dielectric layer and metallic outer layer exceeding 1000 A° can be used for making a master record.

The invention includes a record, for example a video disc, made from a record blank as defined, and also includes a method of making such a record in which the wavelength of the write beam of radiation is such that the thickness of the layer of dielectric material is an odd number of quarter wave lengths.

Other aspects and advantages of the present invention will become apparent from the following description of the preferred embodiment, taken in conjunction with the accompanying drawings, which disclose, by way of example, the principles of the invention.

Brief Description of the Drawings

FIGURE 1 is a simplified block diagram of a direct-read-after-write recording apparatus for recording information on an information record disc, and for recovering the information therefrom to verify that it was properly recorded;

FIGURE 2 is an enlarged plan view of a portion of the information record disc depicted in FIGURE 1, showing the arrangement of information-bearing pits that form a plurality of parallel information tracks;

FIGURE 3 is a sectional view (not to scale) of an information recording medium in accordance with the present invention, prior to the formation of information bearing pits therein;

FIGURE 4 is a sectional view of the recording medium of FIGURE 3, after the information-bearing pits have been formed therein by the apparatus of FIGURE 1; and

FIGURE 5 is a sectional view of another information recording medium in accordance with the present invention, this medium having a transparent protective layer, spaced from the information-bearing layers.

Description of the Preferred Embodiments

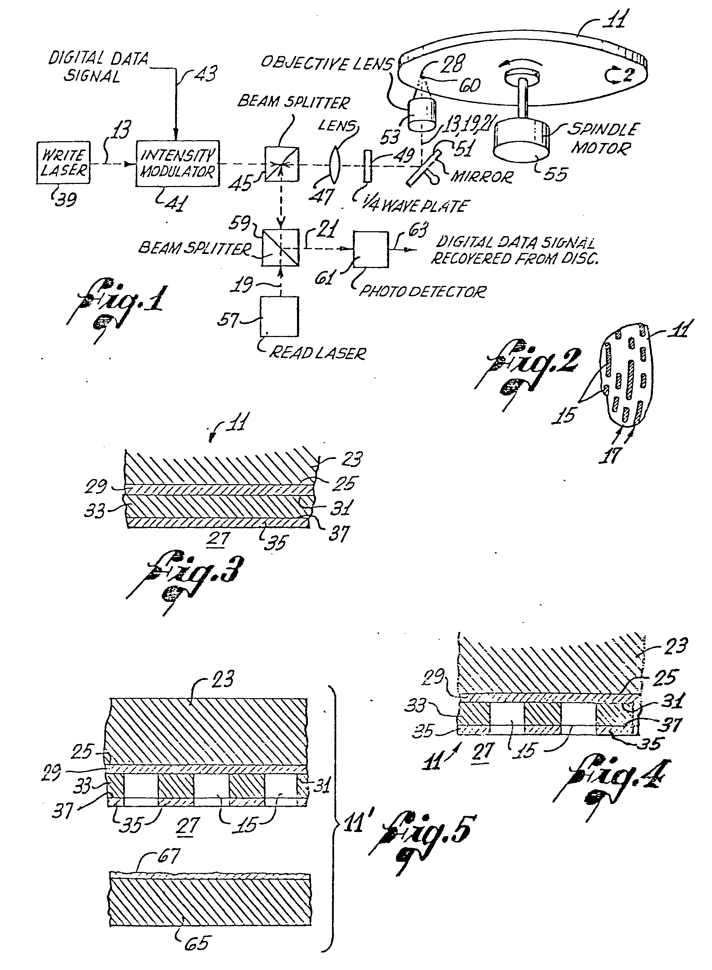

Referring now to the drawings, and particularly to FIGURE 1, there is shown the optical portion of a direct-read-after-write recording apparatus for recording information on a rotatable information recording disc 11 and for then verifying that the correct information has been recorded. The apparatus operates by directing an intensity-modulated write beam of radiation 13 onto the disc, as the disc is rotated at a prescribed angular velocity, to form a succession of microscopic information-bearing pits 15 (FIGURE 2), arranged in a plurality of substantially circular information tracks 17 in a spiral of concentric circle pattern on the disc. Further, the apparatus operates to verify that the information was properly recorded on the disc by directing a read beam of radiation 19, of substantially uniform intensity, onto the successive pits immediately after they are formed, whereby an intensity-modulated reflected beam 21 is produced, having a relatively low intensity when a pit is being scanned and a relatively high intensity when a region not occupied by a pit is being scanned.

FIGURE 3 is a simplified cross-sectional view of the information recording disc 11 that is used with the recording apparatus of FIGURE 1. The disc includes a poly methyl methacrylate substrate 23 having an upper planar surface 25, along with a plurality of special layers overlaying the planar surface. Although a particular orientation is specified for the disc in describing the relative positions of the various special layers, it will be appreciated that the invention is not limited to any one special orientation. The write beam of radiation 13 is transmitted through a medium of air 27 adjacent the disc and is focused to a diffraction-limited spot 28 on the outermost one of the special layers.

In accordance with the invention, the special layers of the disc 11 include an inner metallic layer 29 overlaying the planar surface 25 of the substrate 23 and having an upper light-reflective surface 31, a light-absorptive dielectric layer 33 overlaying the inner metallic layer and having a thickness approximately equal to an odd integral multiple of one-fourth the wavelength of the write beam of radiation 13 in the dielectric material, and an outer metallic layer 34 overlaying the dielectric layer and having a lower light-reflective surface 37. These layers can be coated on the substrate 23 using conventional techniques, such as vacuum deposition or sputtering. The inner and outer metallic layers can be formed advantageously of aluminium and the dielectric layer of silicon monoxide.

The disc 11 is positioned such that the respective write and read beams of radiation 13 and 19 are focused onto the outer metallic layer 35. The outer metallic layer is sufficiently thin, preferably less than about 50 A°, that it is essentially semi-transparent and only a very small proportion of the write beam incident thereon is absorbed. The inner metallic layer 29 preferably has a thickness of about 600 A° and it reflects substantially all of the radiation incident on it. Additionally, since the dielectric layer 33 has a thickness approximately equal to an odd integral multiple of one-fourth the wavelength of the write beam in the dielectric material, the layer acts as an interference or anti-reflection film, thereby reducing substantially initial reflection of the write beam at the interface between the air 27 and the outer metallic layer 35 and reducing substantially transmission of the write beam into the inner metallic layer 29 and the substrate 23. As a consequence, only a very small proportion of the energy in the write beam is wasted, with the remainder being absorbed by the dielectric layer.

The dielectric layer 33 preferably comprises a material that undergoes sublimation rather than melting, such that the material evaporates to leave a relatively residue-free pit whenever the intensity of the write beam of radiation 13 exceeds a predetermined threshold. FIGURE 4 depicts the recording medium of FIGURE 3 after the evaporation of selected portions of the dielectric layer 33 has occurred. It will be noted that the evaporating material has carried with it the overlaying portions of the outer metallic layer 35, whereby the succession of information-bearing pits 15 have been formed.

It will be appreciated that the respective proportions of the write beam of radiation 13 that are reflected and transmitted at each of the boundaries between the respective layers vary as a function of the respective complex indices of refraction of the layers and, additionally, as a function of the respective thicknesses of the layer, such thickness affecting the phase shifts undergone by the write beam in each layer. By selecting the thickness of the dielectric layer 33 to be approximately an odd integral multiple of one-fourth the wavelength of the write beam in the dielectric material, interference principles result in only a very small proportion of the beam being lost to initial reflection off the outer metallic layer 35 or transmission into the inner metallic layer 29 and the substrate 23. Most of the write beam is then confined to the dielectric layer by being reflected repeatedly by the light-reflective surfaces 31 and 37 of the inner and outer metallic layers 29 and 35, respectively. Thus, the effective path length of the write beam in the dielectric material is increased and, despite its having a relatively low index of absorption, the material can be evaporated with a relatively low-intensity beam. It is important to note that the outer metallic layer functions to enhance the proportion of the write beam that is reflected repeatedly back into the dielectric layer, where it is eventually absorbed.

A more detailed discussion of the computations necessary to determine the precise proportions of the write beam that are transmitted or reflected at the boundaries between the various special layers is provided in an article written by A. E. Bell and F. W. Spong, entitled "Antireflection Structures for Optical Recording", appearing in *IEEE Journal of Quantum Electronics,* Vol. QE—14, No. 7, July 1978.

It will also be appreciated that when the intensity of the write beam 13 exceeds a predetermined level, there will be sufficient energy absorbed by the dielectric material to cause it to be evaporated. Also, since the intensity-modulated write beam has an intensity that is alternately greater than and less than that predetermined level, in accordance with the information to be recorded, a succession of pits 15, indicative of the information, will be formed. When sufficient energy is absorbed by the dielectric material to cause it to be evaporated, the evaporating material will carry with it the overlaying portion of the outer metallic layer 35. Thus, a pit is formed in both the dielectric layer 33 and the outer metallic layer.

Since the dielectric layer 33 has a relatively low thermal conductivity, as compared with that of metallic film recording media of the prior art, heat is not conducted radially outwardly to any significant degree from the point of impingement of the write beam 13 with the disc 11. Thus, each pit 15 formed in the disc has a size approximately equal to the size of the spot formed by the write beam. Additionally, since the preferred dielectric material undergoes sublimation, rather than melting, very little residue is deposited around the periphery of each pit. A consequence of this capability of forming relatively small and residue-free pits is that a relatively high information recording density can be achieved and the information can be recovered from the disc with a relatively high signal-to-noise ratio.

In using the apparatus of FIGURE 1, a helium cadmium laser 39 produces a monochromatic write beam with a wavelength of 4420 A° whose intensity is modulated in accordance with the digital data at 43 by a modulator 41. The intensity modulated beam passes a beam splitter 45, a lens 47, and a quarter wave plate 49 before reflection by a tracking mirror 51 and focusing onto the disc by a lens 53. The disc is rotated by a motor 55 as the mirror and lens are moved radially on a carriage so that the information is recorded on a spiral track of pits corresponding to parts of the data signal producing a beam intensity above the threshold evaporating intensity.

A helium neon laser 57 produces a constant intensity read beam with a wavelength of 6328 A° so that if the thickness of the layer 33 is three quarters of the wavelength of the write beam, it will be about half the wavelength of the read beam, and there will be destructive interference of the write beam but good reflection of the read beam. The silicon monoxide dielectric layer could be 200 A° thick. The read beam 19 is passed through a second beam splitter 59 to the first beam splitter 45 after which it follows the same path as the write beam until it is formed as a defraction limited spot 60 on the disc. The separation of the points 28 and 60 is about 25 microns at a common radius. After reflection, the read beam leaving the second beam splitter 59 is reflected to a photodetector 61 which produces a digital data signal at 63 for use in verifying that the recording has been correctly made.

FIGURE 5 is a simplified cross-sectional view of an alternative form of a multi-layer record disc 11' constructed in accordance with the present invention. The disc is generally equivalent to that depicted in FIGURE 3, except that it further includes a transparent protective layer 65 disposed in spaced relationship to the information-bearing layers of the disc. The protective layer is preferably spaced about 25 microns from outer metallic layer 35, and it functions primarily to protect the outer metallic layer and the dielectric layer 33 from abrasion after information has been recorded therein. Only negligible proportions of both the write beam of radiation 13 and the read beam of radiation 19 are absorbed by the protective layer.

It will be appreciated that after information has been recorded on the disc of FIGURE 5, the protective layer 65 may have a thin coating of material 67 deposited thereon because of the evaporation of the dielectric and outer metallic layers 33 and 35, respectively. This coating does not have any significant effect on the readability of the recorded disc, however, because it is so thin that most of the read beam of radiation 13 will be transmitted and because it is spaced sufficiently far from the focal plane of the objective lens 53 that any localized unevenness in the thickness of the coating will be averaged out.

In addition to use in direct-read-after-write apparatus of the type shown in FIGURE 1, the information recording medium of FIGURE 3 can also be used advantageously as a master recording disc for use in the replication of discs for playback use only. The combined thickness of the dielectric layer 33 and the outer metallic layer 35 is preferably between 1000 and 1300 A°, so that the pits will have sufficient depth to produce replicas that are readily readable by conventional playback apparatus. Use of the information recording disc of the present invention in such a mastering machine permits the use of a write beam of much lower intensity than was heretofore possible with recording media of the prior art. Additionally, substantially higher recording densities and signal-to-noise ratios for such replication masters are attainable when recording media in accordance with the present invention are utilised.

From the foregoing description, it should be apparent that the present invention provides an imroved information recording medium for use in both direct-read-after-write and master recording apparatus, which enables the use of a lower-intensity write beam of radiation, while at the same time providing a relatively high information recording density and an improved signal-to-noise ratio.

The record may be a video disc carrying a spiral information track about $\frac{1}{2}$ micron wide with 1 micron spacing between adjacent track centre. Thus the pits would be $\frac{1}{2}$ micron wide and 1/5 micron depth (if the dielectric layer is 2000 A° thick) and their lengths along the track and the spacing along the track between the pits would vary between 1.0 and 1.5 microns in dependence upon the information carried.

## Claims

1. A record blank on which information can be recorded in the form of a track of spaced pits and comprising: a substrate (23) with a light-reflective surface (31); a layer (33) of dielectric material overlying the light-reflective surface of said substrate; an outer layer (35) of metallic material overlaying said layer of dielectric material, said outer layer (35) of metallic material being at least partially transparent to incoming light, characterised in that: said dielectric material is a light absorbing material; said outer layer (35) of metallic material is substantially non-absorbing of light: and the surface (37) of said outer layer (35) of metallic material in contact with said dielectric material is at least partially light-reflective, whereby light incident locally on the outer layer (35) of metallic material will be at least partially transmitted to said dielectric material and reflected between said reflective surface (31) of said substrate and said reflective surface (37) of said outer layer (35) of metallic material so that said dielectric material will be locally evaporated by the absorbed light, the vaporised material carrying with it the overlying portion of the outer layer (35) of metallic material to form a pit (15).

2. A record blank as claimed in Claim 1 in which the outer layer (35) is up to about 100 A° thick.

3. A record blank as claimed in Claim 1 or Claim 2 in which the substrate (23) has a reflective surface (31) provided by an aluminium or other metal layer (29) thicker than the outer layer (35) of metallic material.

4. A record blank as claimed in any of the preceding claims in which the outer layer (35) is of aluminium, or other metal.

5. A record blank as claimed in any of the preceding claims in which the layer (33) of dielectric material which can be evaporated by absorbed light is composed of silicon monoxide.

6. A record blank as claimed in any of the preceding claims in which the layer (33) of dielectric material is substantially thicker than the outer layer (35).

7. A record blank as claimed in any of the preceding claims in which the combined thickness of said dielectric layer (33) and said outer layer (35) is greater than 1000 A°.

8. A record carrying information in the form of a track of spaced pits (15), for example a video disc, the spaced pits (15) extending through the outer layer (35) and the layer (33) of dielectric material of a record blank as claimed in any of Claims 1—7.

9. A record as claimed in Claim 8 having a transparent protective layer (65) covering, but spaced from, the exposed surface of the outer layer (35).

10. A record as claimed in Claim 8 or Claim 9 in which the cross sectional area of the pits (15) is so small that radiation reflected from the reflective surface (31) of the substrate exposed by a pit (15) is scattered on leaving the pit.

11. A record as claimed in any of Claims 8—10, in combination with means for generating a write beam (13) of monochromatic radiation, the thickness of the layer (33) of dielectric material being approximately equal to an odd number of quarter-wavelengths of the write beam (13) of radiation, and/or means for generating a read beam (19) of monochromatic radiation, the thickness of the layer (33) of dielectric material being approximately an even number of quarter-wavelengths of the read beam (19) of radiation.

12. A method of making a record as claimed in any of Claims 8—10 from a blank as claimed in any of Claims 1—7 using a write beam (13) of radiation to form the pits (15), the thickness of the layer (33) of dielectric material being approximately equal to an odd number of quarter-wavelengths of the write beam (13) of radiation.

13. A method as claimed in Claim 12 in which the pits (15) are formed by evaporating away the dielectric material (33) and removing at the same time the outer layer (35) at the same position.

14. A method as claimed in Claim 12 or Claim 13 in which during formation of the pits (15) the radiation is reflected repeatedly through the dielectric material (33) between the two reflective surfaces (31, 37).

## Revendications

1. Flan de disque où l'information peut être enregistrée sous la forme d'une piste de trous espacés et comprenant: un substrat (23) ayant une surface réfléchissant la lumière (31); une couche (33) d'un matériau diélectrique recouvrant la surface réfléchissant la lumière dudit substrat; une couche externe (35) d'un matériau métallique recouvrant ladite couche de matériau diélectrique, ladite couche externe (35) de matériau métallique étant au moins partiellement transparente à la lumière reçue, caractérisé en ce que: ledit matériau diélectrique est un matériau absorbant la lumière; ladite couche externe (35) de matériau métallique n'absorbe sensiblement pas la lumière: et la surface (37) de ladite couche externe (35) de matériau métallique en contact avec ledit matériau diélectrique réfléchit au moins partiellement la lumière, ainsi la lumière localement incidente sur la couche externe (35) de matériau métallique est au moins partiellement transmise audit matériau diélectrique et est réfléchie entre ladite surface réfléchissante (31) dudit substrat et ladite surface réfléchissante (37) de ladite couche externe (35) de matériau métallique afin que ledit matériau diélectrique soit localement évaporé par la lumière absorbée, le matériau vaporisé entraînant avec lui la partie située au-dessus de la couche externe (35) de matériau métallique pour former un trou (15).

2. Flan de disque selon la revendication 1 où la couche externe (35) peut atteindre jusqu'à environ 100 Å d'epaisseur.

3. Flan de disque selon la revendication 1 ou la revendication 2 où le substrat (23) a une surface réfléchissante (31) formée d'une couche d'aluminium ou d'un autre métal (29) plus épaisse que la couche externe (35) de matériau métallique.

4. Flan de disque selon l'une quelconque des revendications précédentes, où la couche externe (35) est en aluminium, ou autre métal.

5. Flan de disque selon l'une quelconque des revendications précédentes, où la couche (33) en matériau diélectrique qui peut être évaporée par la lumière absorbée, se compose de propoxyde de silicium.

6. Flan de disque selon l'une quelconque des revendications précédentes, où la couche (33) de matériau diélectrique est sensiblement plus épaisse que la couche externe (35).

7. Flan de disque selon l'une quelconque des revendications précédentes, où l'épaisseur combinée de la couche diélectrique (33) et de la couche externe (35) est supérieure à 1000 Å.

8. Enregistrement portant l'information sous la forme d'une piste de trous espacés (15), par exemple un vidéodisque, les trous espacés (15) s'étendant à travers la couche externe (35) et la couche (33) de matériau diélectrique d'un flan de disque selon l'une quelconque des revendications 1 à 7.

9. Enregistrement selon la revendication 8 ayant une couche protectrice transparente (65) couvrant, en en étant espacée, la surface exposée de la couche externe (35).

10. Enregistrement selon la revendication 8 ou la revendication 9, où l'aire en coupe transversale des trous (15) est si petite que le rayonnement réfléchi par la surface réfléchissante (31) du substrat exposé par un trou (15) est dispersé en quittant le trou.

11. Enregistrement selon l'une quelconque des revendications 8 à 10 en combinaison avec un moyen pour produire un faisceau d'écriture (13) de rayonnement monochromatique, l'épaisseur de la couche (33) de matériau diélectrique étant à peu près égale à un nombre impair d'un quart de longueur d'onde du faisceau de rayonnement d'écriture (13) et/ou un moyen pour produire un faisceau de lecture (19) de rayonnement monochromatique, l'épaisseur de la couche (33) du matériau diélectrique étant à peu près égale à un nombre pair de quarts de longueur d'onde du faisceau de rayonnement de lecture (19).

12. Procédé de formation d'un enregistrement selon l'une quelconque des revendications 8 à 10, à partir d'un flan selon l'une quelconque des revendications 1 à 7 en utilisant un faisceau de rayonnement d'écriture (13) pour former les trous (15), l'épaisseur de la couche (33) du matériau diélectrique étant à peu près égale à un nombre impair de quarts de longueur d'onde du faisceau de rayonnement d'écriture (13).

13. Procédé selon la revendication 12, où les trous (15) sont formés par évaporation du matériau diélectrique (33) et en enlevant en même temps la couche externe (35) à la même position.

14. Procédé selon la revendication 12 ou la revendication 13, où, pendant la formation des trous (15), le rayonnement est réfléchi de façon répétée à travers la matériau diélectrique (33) entre les deux surfaces réfléchissantes (31, 37).

## Patentansprüche

1. Aufzeichnungsträger-Rohling, auf dem Information in Form einer Spur von mit Abstand vorgesehenen Vertiefungen aufgezeichnet werden kann, mit: einem Substrat (23) mit einer lichtreflektierenden Oberfläche (31); einer die lichtreflektierende Oberfläche des Substrats bedeckenden Schicht (33) aus dielektrischem Material; einer die Schicht aus dielektrischem Material bedeckenden äußeren Schicht (35) aus metallischem Material, welche für das auftreffende Licht zumindest teilweise durchlässig ist, dadurch gekennzeichnet, daß das dielektrische Material ein lichtabsorbierendes Material ist; die äußere Schicht (35) aus metallischem Material im wesentlichen nicht-lichtabsorbierend ist; und die Oberfläche (37) der äußeren Schicht (35) aus metallischem Material in Kontakt mit dem dielektrischen Material wenigstens teilweise lichtreflektierend ist, wodurch örtlich auf die äußere Schicht (35) aus metallischem Material einfallendes Licht zumindest teilweise zum dielektrischen Material durchgelassen und zwischen der reflektierenden Oberfläche (31) des Subtrates und der reflektierenden Oberfläche (37) der äußeren Schicht (35) aus metallischem Material reflektiert wird, so daß das dielektrische Material durch das absorbierte Licht örtlich verdampft wird, wobei das verdampfte Material den darüberliegenden Teil der äußeren Schicht (35) aus metallischem Material mit sich mitnimmt, um eine Vertiefung (15) zu bilden.

2. Aufzeichnungsträger-Rohling nach Anspruch 1, bei dem die äußere Schicht (35) bis zu ungefähr 10 nm dick ist.

3. Aufzeichnungsträger-Rohling nach Anspruch 1 oder Anspruch 2, bei dem das Substrat (23) eine durch eine Schicht (29) aus Aluminium oder einem anderen Metall, die dicker als die äußere Schicht (35) aus metallischem Material ist, gebildete reflektierende Oberfläche (31) hat.

4. Aufzeichnungsträger-Rohling nach einem der vorhergehenden Ansprüche, bei dem die äußere Schicht (35) aus Aluminium oder einem anderen Metall besteht.

5. Aufzeichnungsträger-Rohling nach einem der vorhergehenden Ansprüche, bei dem die Schicht (33) aus dielektrischem Material, das durch absorbiertes Licht verdampft werden kann, aus Siliziummonoxid besteht.

6. Aufzeichnungsträger-Rohling nach einem der vorhergehenden Ansprüche, bei dem die Schicht (33) aus dielektrischem Material wesentlich dicker als die äußere Schicht (35) ist.

7. Aufzeichnungsträger-Rohling nach einem der vorhergehenden Ansprüche, bei dem die Dicke der dielektrischen Schicht (33) und der äußeren Schicht (35) zusammen größer als 100 nm ist.

8. Aufzeichnungsträger, der Information in Form einer Spur von mit Abstand vorgesehenen Vertiefungen (15) trägt, beispielsweise Bildplatte, wobei sich die mit Abstand vorgesehenen Vertiefungen (15) durch die äußere Schicht (35) und die Schicht (33) aus dielektrischem Material eines Aufzeichnungsträger-Rohlings nach einem der Ansprüche 1 bis 7 erstrecken.

9. Aufzeichnungsträger nach Anspruch 8, mit einer transparenten Schutzschicht (65), die die exponierte Oberfläche der äußeren Schicht (35) bedeckt, jedoch in Abstand hievon vorgesehen ist.

10. Aufzeichnungsträger nach Anspruch 8 oder Anspruch 9, bei dem die Querschnittsfläche der Vertiefungen (15) derart klein ist, daß von der reflektierenden, durch eine Vertiefung (15) freigelegten Oberfläche (31) des Substrats reflektierte Strahlung beim Verlassen der Vertiefung gestreut wird.

11. Aufzeichnungsträger nach einem der Ansprüche 8 bis 10, in Kombination mit Mitteln zur Erzeugung eines Schriebbündels (13) einer monochromatischen Strahlung, wobei die Dicke der Schicht (33) aus dielektrischem Material annähernd gleich einer ungeraden Anzahl von Viertelwellenlängen des Schreibstrahlungsbündels (13) ist, und/oder mit Mitteln zur Erzeugung eines Lesebündels (19) aus monochomatischer Strahlung, wobei die Dicke der Schicht (33) aus dielektrischem Material annähernd gleich einer geraden Anzahl von Viertelwellenlängen des Lesestrahlungsbündels (19) ist.

12. Verfahren zur Herstellung eines Aufzeichnungsträgers nach einem der Ansprüche 8 bis 10 aus einem Rohling nach einem der Ansprüche 1 bis 7 unter Verwendung eines Schreibstrahlungsbündels (13) zur Bildung der Vertiefungen (15), wobei die Dicke der Schicht (33) aus dielektrischem Material annähernd gleich einer ungeraden Anzahl von Viertelwellenlängen des Schreibstrahlungsbündels (13) ist.

13. Verfahren nach Anspruch 12, bei dem die Vertiefungen (15) durch Wegdampfen des dielektrischen Materials (33) und gleichzeitiges Entfernen der äußeren Schicht (35) an derselben Stelle gebildet werden.

14. Verfahren nach Anspruch 12 oder 13, bei dem während der Bildung der Vertiefungen (15) die Strahlung wiederholt durch das dielektrische Material (33) zwischen den zwei reflektierenden Oberflächen (31, 37) reflektiert wird.

DIGITAL DATA SIGNAL *43*

OBJECTIVE LENS *28* *60*

*11*

*C2*

BEAM SPLITTER

LENS

*53*

*13,19,21*

*51*

SPINDLE MOTOR

*13*

WRITE LASER *39*

INTENSITY MODULATOR *41*

*45*

*47*

*49*

MIRROR

*55*

¼ WAVE PLATE

*59*

BEAM SPLITTER

*21*

*63*

DIGITAL DATA SIGNAL RECOVERED FROM DISC.

*19*

*61*

PHOTO DETECTOR

*Fig.1*

*57*

READ LASER

*Fig.2*

*11*

*15*

*17*

*11*

*23*

*29*

*25*

*33*

*31*

*27*

*35*

*37*

*Fig.3*

*23*

*25*

*29*

*33*

*37*

*35*

*27*

*15*

*31*

*11'*

*67*

*65*

*Fig.5*

*29*

*33*

*35*

*11'*

*27*

*15*

*23*

*25*

*31*

*37*

*35*

*Fig.4*

1